# EUROPEAN PATENT SPECIFICATION

(11) **EP 3 153 262 B1**
(45) Date of publication and mention of the grant of the patent: **18.05.2022**
(21) Application number: 15188401.2
(22) Date of filing: 05.10.2015
(51) Int. Cl.: B23B 31/10, B23B 31/16

(54) **CHUCK FOR HOLDING A WORK PIECE IN A TURNING MACHINE**
SPANNFUTTER ZUM HALTEN EINES WERKSTÜCKS IN EINER DREHMASCHINE
MANDRIN DESTINÉ À MAINTENIR UNE PIÈCE DANS UNE MACHINE DE TOURNAGE

(43) Date of publication of application: 12.04.2017
(73) Proprietor: thyssenkrupp rothe erde Italy S.p.A., 25010 Visano (BS) (IT); thyssenkrupp AG, 45143 Essen (DE)
(72) Inventor: CHERUBINI, Fabrizio, 25025 Manerbio (IT); KOFLER, Martin, 39010 St. Felix (Bozen) (IT)
(74) Representative: thyssenkrupp Intellectual Property GmbH

(56) References cited:
- EP-A1- 2 298 475
- DE-A1- 3 425 603
- US-A- 1 253 224
- US-A- 2 667 358

## Description

### Background of the invention

The invention relates to a chuck according to the preamble of claim 1. Equally the invention relates to a chuck according to the preamble of claim 4. An example of a chuck according to the preambles of claims 1 and 4 is disclosed by DE 3425603 A1.

Chucks of such type are employed as gripping devices in turning machines in order to hold work pieces. Such chucks usually comprise a cylindrical base that is attachable to the turning machine. The base typically has several radial slots. Said slots receive movable or sliding jaws which can be moved radially inwardly or outwardly in order to adapt the chuck to work pieces of different geometry. The jaws may be fixed at a position along the slot by bolts or screws. Often chucks of this type have a wide range of jaw movement enabling them to hold both small and large work pieces.

However, the set-up time of such a chuck is rather high. In order to adjust the chuck to a work piece of different geometry it is at first required to clean chips from the radial slots. Then the bolts or screws of all the jaws need to be loosened before the jaws may be moved to their new radial position along the slot. Finally, all the bolts or screws need to be tightened in order to fix the jaws to the base. Loosening and tightening of the bolts or screws is often done manually.

### Summary of the invention

It is an object of the present invention to decrease the set-up time of the chuck.

This object is achieved by a chuck as defined in claim 1. Alternatively, this object is achieved by a chuck as defined in claim 4. Advantageous optional embodiments are defined in the dependent claims.

The invention is suitable to be applied as a retrofit solution to existing chucks, in particular to chucks having a cylindrical base comprising slots. However, it should be apparent to those skilled in the art that the invention may also be applied to the original manufacture of chucks for turning machines.

According to a preferred embodiment of the invention said locking element comprises a toothing. When being in engagement with the toothed rack the toothing fixes the jaw device to the respective adaptor. The toothing may comprise two or more teeth. Preferably, the toothing comprises exactly three teeth. Preferably the tooth width of the toothing of the jaw device and the tooth width of the toothed rack are identical.

Preferably said locking element is movable in a direction perpendicular to the radial direction of the cylindrical base. Particularly preferred said locking element is movable in the axial direction of the cylindrical base.

According to a preferred embodiment of the invention said locking element is preloaded towards the locking position. By preloading the locking element towards the locking position the jaw device is by default locked with the adaptor. The locking element can automatically snap into the toothed rack of the adaptor thereby avoiding the need to actively secure the jaw device to the adaptor. Preferably the locking element is preloaded by means of a spring, in particular a compression spring.

According to present invention said locking element is movable from the locking position towards the release position by means of an actuating element. The actuating element provides a means to manually release the jaw device from being locked with the adaptor. The actuating element may be connected to the locking element such that the locking element may be moved together with the actuating element, in particular against the restoring force of a spring.

It is provided according to the present invention that the jaw device comprises a support element for rotatably supporting a lever tool in an actuating position in which the lever tool is actuating the actuating element. The provision of a support element for a lever tool further reduces the effort for setting up of the chuck. By means of a lever tool the jaw device may be released from a fixed radial position with less effort as compared to loosening of a bolt or a screw. The support element provides a rotational axis for rotating said lever tool when actuating the actuating element, wherein said rotational axis is preferably oriented perpendicular to the radial direction of the cylindrical base. In particular, the rotational axis for rotating said lever tool is oriented perpendicular to the rotational axis of the cylindrical base.

According to the invention the toothed rack comprises a longitudinal member with a first lateral surface and a second lateral surface, the second lateral surface opposing the first lateral surface, wherein a first toothing is arranged on the first lateral surface and a second toothing is arranged on the second lateral surface. Such a toothed rack has the advantage that the locking element of the jaw device can engage with both the toothing on the first and the toothing on the second lateral surface thereby providing enhanced stability. Preferably, the toothed rack further comprises a top surface connecting the first lateral surface and the second lateral surface, wherein the top surface is not toothed, in particular the top surface is smooth. The top surface may serve as a sliding surface on which the jaw device may slide in radial direction when the locking element is in the release position.

According to another preferred embodiment of the invention each jaw device has a jaw base configured for mounting to the adaptor and a top jaw configured to contact said work piece and mounted on the jaw base. The jaw base may be configured to engage behind the toothed rack of the adaptor such that the jaw base can only be detached from the adaptor by moving the jaw base in the radial direction.

It is preferred that each jaw device, in particular said top jaw of each jaw device, comprises a first removable insert with a first contact surface for contacting said work piece. The insert is removable in order to allow exchanging the insert in case the contact surface is worn out or in case the geometry of the contact surface is to be adapted to a given surface geometry of the work piece.

According to a preferred embodiment of the invention each jaw device, in particular said top jaw of each jaw device, comprises a second removable insert with a second contact surface for contacting a work piece, wherein said first contact surface is oriented radially inward towards a rotational axis of the cylindrical base and said second contact surface is oriented radially outward away from said rotational axis of the cylindrical base. This embodiment has the advantage that hollow work pieces, in particular rings or hollow cylinders, may be held either by contacting an outer surface of the hollow work piece or by contacting an inner surface of the work piece. It is not required to turn the jaw device or exchange the jaw device when changing the chuck from contacting the inner surface to contacting the outer surface or vice versa. Thereby the setup time of the chuck is further reduced.

According to a preferred embodiment of the invention the cylindrical base comprises at least three radially extending slots, at least three adaptors mounted in said radially extending slots and at least three jaw devices mounted on said adaptors. Preferably, the cylindrical base comprises at least six radially extending slots, at least six adaptors mounted in said radially extending slots and at least six jaw devices mounted on said adaptors.

According to another preferred embodiment the adaptors are movable within the radially extending slots in order to clamp the work piece. By moving the adaptors radially inward or radially outward a work piece can be clamped by the jaw devices of the chuck. It is preferred that the adaptors are movable by a hydraulic actuator. Alternatively, a mechanical, a pneumatic or an electric actuator may be employed for moving the adaptors.

These and other aspects of the invention will be apparent from and elucidated with reference to the embodiment described hereinafter.

### Brief description of the drawings

**Fig. 1** shows a top view of a chuck in accordance with an embodiment of the invention.
**Fig. 2** shows a perspective view of the cylindrical base and the adaptors of the chuck according to Fig. 1.
**Fig. 3** shows a perspective view of a jaw device of the chuck according to Fig. 1.
**Fig. 4** shows another perspective view of the jaw device according to Fig. 3.
**Fig. 5** shows a sectional view of the jaw device according to Fig. 3 along a horizontal plane.
**Fig. 6** shows a sectional view of the jaw device according to Fig. 3 along a vertical plane, wherein the locking element is in the locking position.
**Fig. 7** shows a sectional view of the jaw device according to Fig. 3 along a vertical plane, wherein the locking element is in the release position.
**Fig. 8** shows a side view of the jaw device according to Fig. 3 wherein a lever tool is supported by the support element.
**Fig. 9** shows a top view of a chuck according to Fig. 1, wherein the jaw devices hold a small ring by contacting the outer surface of the ring.
**Fig. 10** shows a top view of a chuck according to Fig. 1, wherein the jaw devices hold a small ring by contacting the inner surface of the ring.
**Fig. 11** shows a top view of a chuck according to Fig. 1, wherein the jaw devices hold a large ring by contacting the inner surface of the ring.

### Detailed description of the drawings

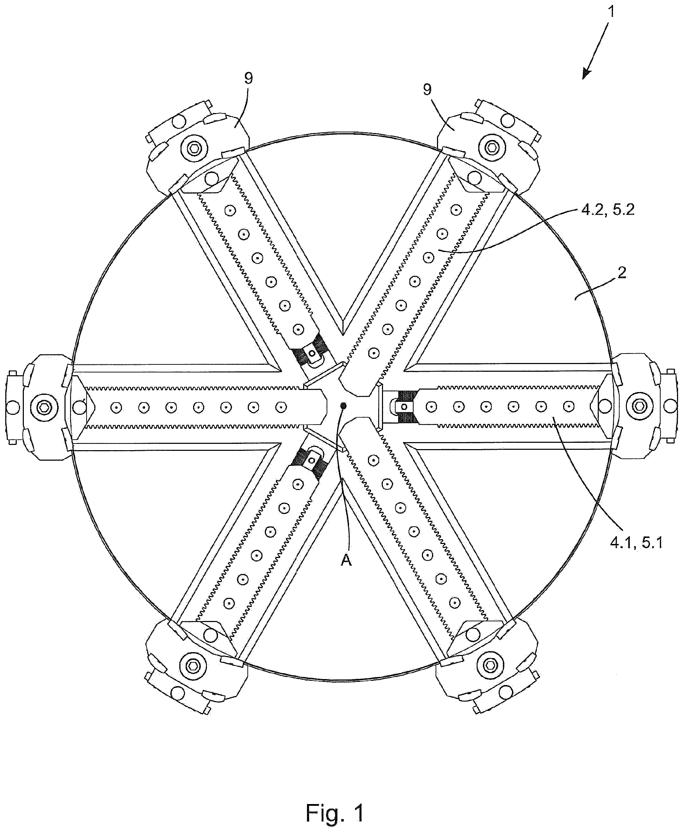

**Fig. 1** illustrates an embodiment of a chuck 1 for a turning machine, in particular a soft-turning machine, according to the invention that is suited for a "just in time" production flow in which a short set-up time of the turning machine is required in order to allow for continuous production of products of different geometry. The chuck 1 can be used to hold rather large and heavy work pieces having outer diameters greater than 1000 mm. When mounted to the turning machine, the chuck 1 is arranged horizontally. Thus, the rotational axis A of the turning machine is oriented vertically.

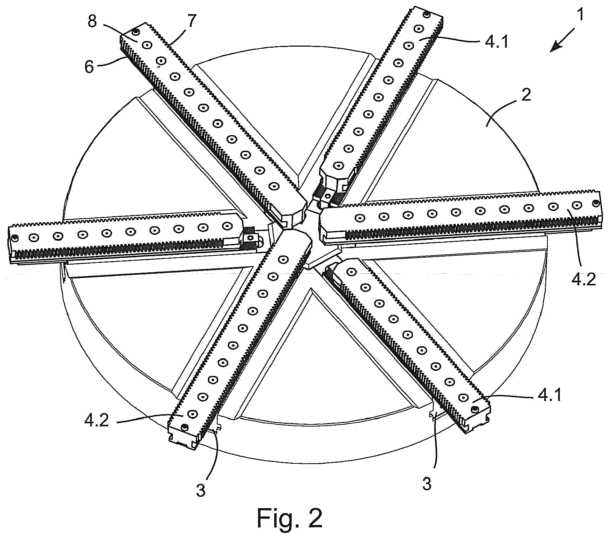

The chuck 1 comprises a cylindrical base 2 that comprises means for attaching the cylindrical base 2 to the turning machine. During operation of the turning machine the cylindrical base 2 is rotated about its rotational axis A which at the same time is the rotational axis of the turning machine A. As illustrated in **Fig. 2** the cylindrical base 2 comprises six slots 3 extending in the radial direction of the cylindrical base 2. The slots 3 have a T-shaped cross section.

Each of the slots 2 holds an adaptor 4.1, 4.2. The adaptors 4.1, 4.2 are of longitudinal form and essentially extend in the radial direction of the cylindrical base 2, in other words the adaptors 4.1, 4.2 extend in parallel to the radial slots of the cylindrical base 2. The chuck 1 comprises two types of adaptors 4.1, 4.2 that differ in their length, in other word in their dimension of the radial direction of the chuck 1. A first adaptor 4.1 has a reduced length as compared to a second adaptor 4.2. The adaptors 4.1, 4.2 are arranged in the radial slots 3 of the cylindrical base 2 such that a first, shorter adaptor 4.1 and a second, longer adaptor 4.2 are arranged in parallel. In the embodiment shown in Fig. 2, first shorter adaptors 4.1 and second, longer adaptors 4.2 are arranged alternately in the circumferential direction of the base 2.

All the adaptors 4.1, 4.2 of the chuck 1 comprise a toothed rack 5.1, 5.2, which extends in parallel to the radially extending slots 3 of the base 2. The toothed rack 5.1, 5.2 of the adaptor 4.1, 4.2 is a double toothed rack. Each toothed rack 5.1, 5.2 comprises a longitudinal member with a first lateral surface 6 and a second lateral surface 7, wherein toothings are arranged on said lateral surfaces 6, 7. The toothings comprise teeth that are oriented in a direction perpendicular to the plane of the lateral surfaces 7, 8 of the adaptors 4.1, 4.2. Thus, the toothings of both the lateral surfaces 6, 7 are directed to opposite directions. The toothed rack 5.1, 5.2 further comprises a top surface 8 connecting the first lateral surface 6 and the second lateral surface 7, wherein the top surface 8 is free of teeth. According to the embodiment the top surface 8 is smooth and optionally comprises recesses for mounting bolts or screws.

With continued reference to Fig. 1 jaw devices 9 are detachably mounted on said adaptors 4.1, 4.2 and are radially movable thereon in order to adapt the chuck 1 to the geometry of the work piece. The jaw devices 9 engage behind the toothings arranged on the lateral surfaces 6, 7 of the adaptors 4.1, 4.2 and may slide on the top surface of the adaptors 4.1, 4.2 in order to adjust the radial position of the jaw devices 6.

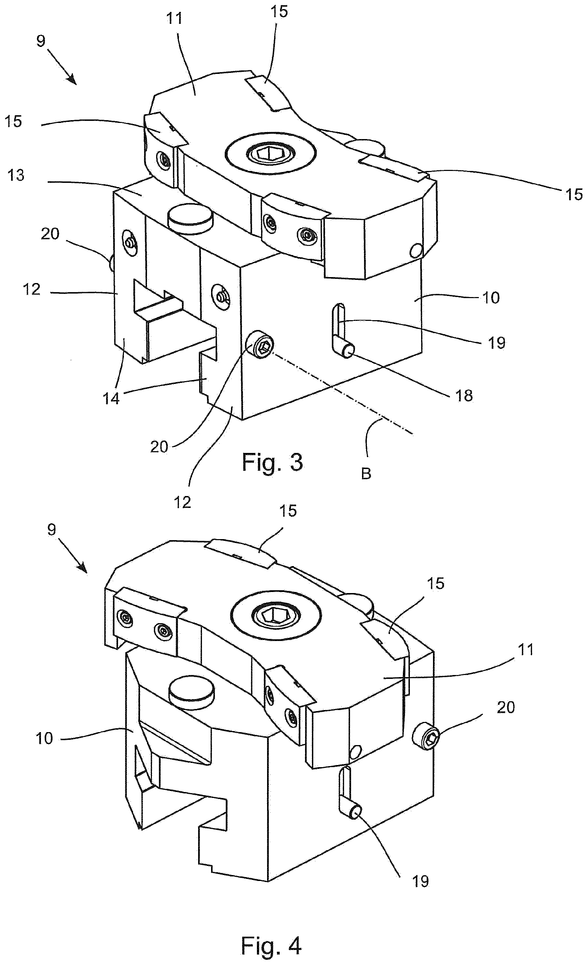

**Fig. 3 and 4** illustrate a jaw device 9 of the chuck 1 in different perspective views. The jaw device 9 comprises a jaw base 10 and a top jaw 11 arranged on top of the jaw base 10 and connected thereto. The jaw base 10 is configured to be mounted on one of the adaptors 4.1, 4.2. The jaw base 10 is generally C-shaped and comprises a main section 13 that is supported by the top surface of the adaptor 4.1, 4.2 as well as two arm sections 12 that extend vertically from both the ends of the main section 13. The arm sections 12 are oriented in the vertical direction. Both arm sections 12 have a projection 14 at their free end which engages behind the toothing of the lateral surfaces 6, 7 of the adapter 4.1, 4.2. The top jaw 11 is rigidly coupled to the jaw base 10 and has a curved shape with a curvature that is typically directed towards the rotational axis A of the chuck 1. The top jaw 11 comprises several inserts 15 which provide contact surfaces for contacting the work piece.

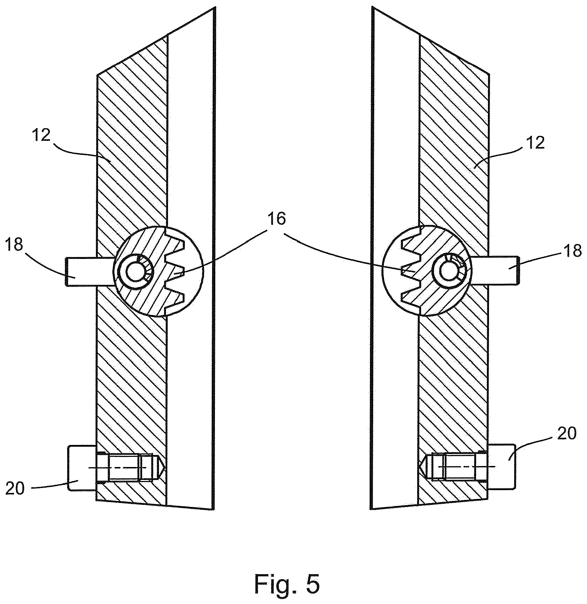

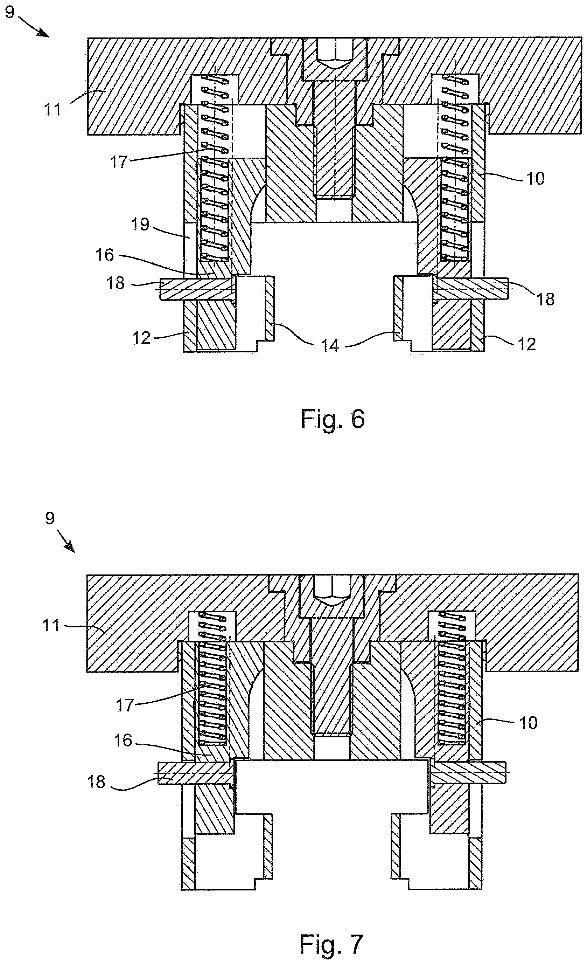

With further reference to **Fig. 5****,** **6 and 7** locking of the jaw device 9 with the adaptor 4.1, 4.2 will be described in the following. The jaw device 9 has a locking element 16 which is movable between a locking position and a release position. In particular the locking element 16 is movable in vertical direction. In the locking position, which is depicted in Fig. 6, the locking element 16 is situated at a lowered position, wherein the locking element 16 is engaging with the toothed rack 5.1, 5.2. As a result the jaw device 9 is locked with the adaptor 4.1, 4.2. The locking element 16 can be moved to a release position in which the locking element 16 is not engaging with the toothed rack 5.1, 5.2. The release position is depicted in Fig. 7. In the release position the locking element 16 is elevated compared to the locking position.

As can be seen from Fig. 5 the locking element 16 comprises two toothings. Each of the toothing comprises three teeth which are arranged on a straight line. In the locking position the teeth of the locking element 16 engage with the teeth situated on the lateral surfaces 6, 7 of the toothed rack 5.1, 5.2 thereby preventing movement of the jaw device against the adaptor 5.1, 5.2. When the locking element 16 is lifted upwards, the teeth of the locking element 16 disengage from the teeth of the toothed rack 5.1, 5.2 thereby releasing the jaw device 9 for movement along the radial direction of the chuck 1.

The locking element 16 is pre-loaded towards the locking position by means of two springs 17. The springs 17 are preferably compression springs, wherein a first end of each spring 17 is fixed to the top jaw 11 and a second end of each spring 17 is fixed to the locking element 16. Consequently, the locking element 16 is by default pushed towards the locking position so as to lock the jaw device 9 with the adaptor 4.1, 4.2. The locking element can automatically snap into the toothed rack 5.1, 5.2 of the adaptor 4.1, 4.2 thereby avoiding the need to actively secure the jaw device 9 to the adaptor 4.1, 4.2. The locking element 16 is guided by interior vertical walls of the jaw base 10.

Furthermore, two actuating elements 18 are connected to the locking element 16. By means of the actuating elements 18 the locking element 16 can be moved from the locking position towards the release position against the force of the springs 17. The actuating element 18 is a pin that protrudes through an elongated hole 19 in the jaw base 10. The elongated hole is oriented in the vertical direction in order to guide the actuating element 18.

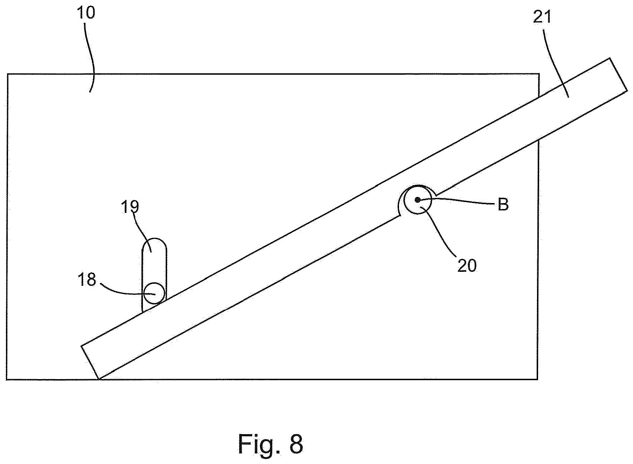

With reference to Fig. 8 the jaw device 9 further comprises support elements 20 for rotatably supporting a lever tool. The support elements 20 are longitudinal elements, in particular pins, arranged on a lateral surfaces of the jaw base 10, in particular on lateral surfaces of the arm sections 12. The support elements 20 provide support for a lever tool 21 that is actuating the actuating element 18 in an actuating position. In the actuating position the lever tool 21 is supported on the support elements 20 and can be rotated about a longitudinal axis B of the support elements. The provision of the support elements 20 for the lever tool 21 further reduces the effort for setting up of the chuck 1. By means of a lever tool the jaw device 9 may be released from a fixed radial position with less effort as compared to loosening of a bolt or a screw.

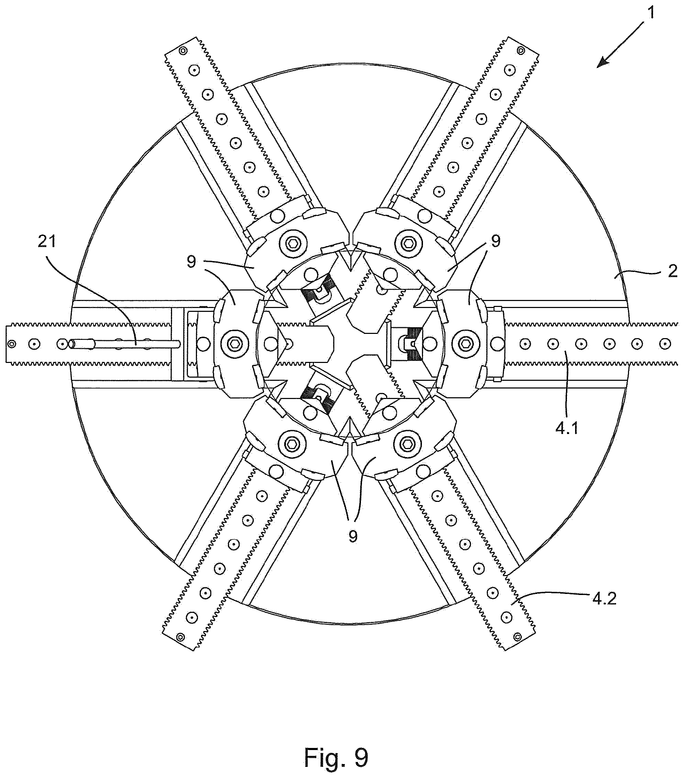

As described above with reference to Fig. 3 and 4 the top jaw 11 of the jaw device 9 comprises several inserts 15 that provide contact surfaces for contacting the work piece. The inserts are removable in order to allow exchanging the inserts in case the contact surface is worn out or in case the geometry of the contact surface is to be adapted to a given surface geometry of the work piece. Inserts 15 are provided both on the side oriented radially inward as well on the side oriented radially outward. Consequently, hollow work pieces like rings or hollow cylinders may be held either by contacting an outer surface of the hollow work piece or by contacting an inner surface of the work piece. It is not required to turn the jaw device 9 or exchange the jaw device 9 when setting up the chuck 1 as will be described with reference to Fig. 9, 10 and 11 in the following.

In Fig. 9 a setup of the chuck 1 is depicted whereby the jaw devices 9 have been moved radially inward compared to the setup depicted in Fig. 1. This setup allows gripping of a work piece with a smaller diameter, wherein the work piece is contacted on its outer surface.

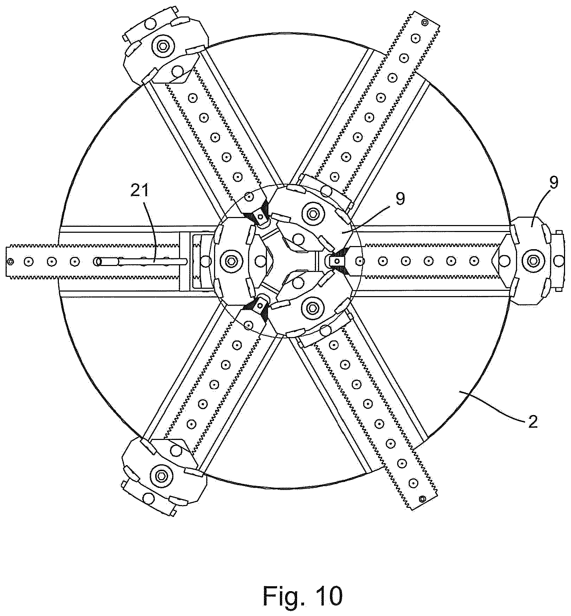

Fig. 10 depicts a setup of the chuck 1 wherein the jaw devices 9 mounted on the longer adaptors 4.2 have been moved further radially inward compared to the situation shown in Fig. 9. The jaw devices 9 that are mounted on the shorter adaptors 4.1 have been moved to a position further radially outward. The setup of Fig. 10 allows gripping of a hollow work piece with a small inner diameter, wherein the work piece is contacted on its inner surface.

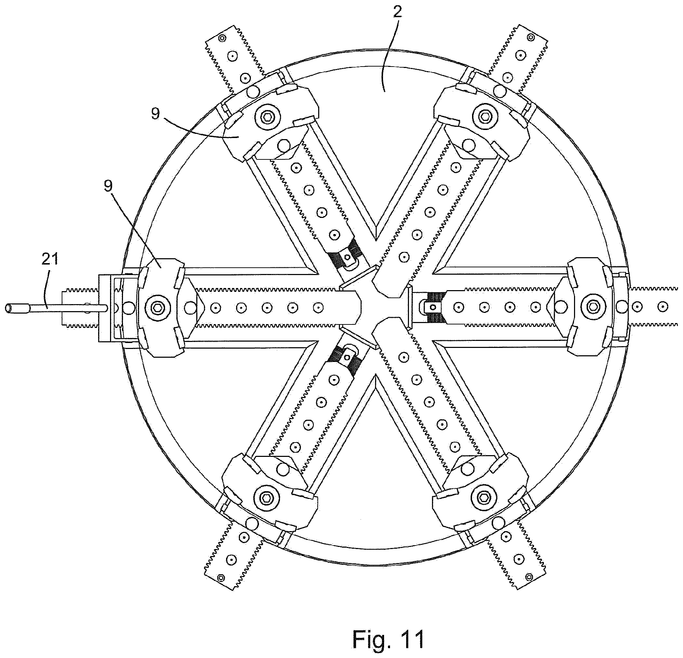

Another setup of the chuck is shown in Fig. 11. In this position, the jaw devices 9 have been moved to a position further radially outward compared to the position of Fig. 9. A hollow work piece may be gripped by contacting the inner surface of the work piece.

The chuck 1 described above is a hydraulic power chuck. The adaptors 4.1, 4.2 of this chuck 1 are movable by a hydraulic actuator along the radially extending slots in order to clamp the work piece.

While the invention has been illustrated and described in detail in the drawings and foregoing description, such illustration and description are to be considered illustrative or exemplary and not restrictive; the invention is not limited to the disclosed embodiments.

### List of reference numerals

- 1: chuck
- 2: base
- 3: slot
- 4.1: adaptor
- 4.2: adaptor
- 5.1: toothed rack
- 5.2: toothed rack
- 6: lateral surface
- 7: lateral surface
- 8: top surface
- 9: jaw device
- 10: jaw base
- 11: top jaw
- 12: arm section
- 13: main section
- 14: projection
- 15: insert
- 16: locking element
- 17: spring
- 18: actuating element
- 19: elongated hole
- 20: support element
- 21: lever tool

- A: rotational axis
- B: longitudinal axis

## Claims

1. A chuck for holding a work piece, in particular a ring, in a turning machine comprising a cylindrical base (2) being configured for attaching said base (2) to said turning machine, wherein the cylindrical base (2) has radially extending slots (3), the chuck further comprising adaptors (4.1, 4.2) mounted in said radially extending slots, wherein each adaptor (4.1, 4.2) has a toothed rack (5.1, 5.2), which extends in parallel to said radially extending slots (3); and jaw devices (9) detachably mounted on said adaptors (4.1, 4.2) and radially movable thereon, wherein each jaw device (9) has a locking element (16), the locking element (16) being movable between a locking position and a release position, wherein the locking element (16) is engaging with the toothed rack (5.1, 5.2) in the locking position and the locking element (16) is not engaging with the toothed rack (5.1, 5.2) in the release position, wherein said locking element is movable from the locking position towards the release position by means of an actuating element (18), **characterized in that** the jaw device comprises a support element (20) for rotatably supporting a lever tool (21) in an actuating position in which the lever tool (21) is actuating the actuating element (18)..

2. The chuck according to claim 1 wherein said locking element (16) comprises a toothing.

3. The chuck according to any of claims 1 or 2 wherein said locking element (16) is pre-loaded towards the locking position.

4. A chuck for holding a work piece, in particular a ring, in a turning machine comprising a cylindrical base (2) being configured for attaching said base (2) to said turning machine, wherein the cylindrical base (2) has radially extending slots (3), the chuck further comprising adaptors (4.1, 4.2) mounted in said radially extending slots, wherein each adaptor (4.1, 4.2) has a toothed rack (5.1, 5.2), which extends in parallel to said radially extending slots (3); and jaw devices (9) detachably mounted on said adaptors (4.1, 4.2) and radially movable thereon, wherein each jaw device (9) has a locking element (16), the locking element (16) being movable between a locking position and a release position, wherein the locking element (16) is engaging with the toothed rack (5.1, 5.2) in the locking position and the locking element (16) is not engaging with the toothed rack (5.1, 5.2) in the release position,**characterized in that** the toothed rack (5.1, 5.2) comprises a longitudinal member with a first lateral surface (6) and a second lateral surface (7), the second lateral surface (7) opposing the first lateral surface (6), wherein a first toothing is arranged on the first lateral surface (6) and a second toothing is arranged on the second lateral surface (7).

5. The chuck according to any of the preceding claims wherein each jaw device (9) has a jaw base (10) configured for mounting to the adaptor (4.1, 4.2) and a top jaw (11) configured to contact said work piece and mounted on the jaw base (10).

6. The chuck according to any of the preceding claims wherein each jaw device (9) comprises a first removable insert (15) with a first contact surface for contacting said work piece.

7. The chuck according to claim 6 wherein each jaw device comprises a second removable insert (15) with a second contact surface for contacting a work piece, wherein said first contact surface is oriented radially inward towards a rotational axis of the cylindrical base (2) and said second contact surface is oriented radially outward away from said rotational axis of the cylindrical base (2).

8. The chuck according to any of the preceding claims wherein the cylindrical base (2) comprises at least three, preferably at least six, radially extending slots (3), at least three, preferably at least six, adaptors (4.1, 4.2) mounted in said radially extending slots (3) and at least three, preferably at least six, jaw devices (9) mounted on said adaptors (4.1, 4.2).

9. The chuck according to any of the preceding claims wherein the adaptors (4.1, 4.2) are movable, in particular by a hydraulic actuator, within the radially extending slots (3) in order to clamp the work piece.

10. Turning machine **characterized by** a chuck (1) for holding a work piece, in particular a ring, according to any of the preceding claims.

## Patentansprüche

1. Spannfutter zum Halten eines Werkstücks, insbesondere eines Rings, in einer Drehmaschine, eine zylindrische Basis (2) umfassend, die dazu ausgelegt ist, die Basis (2) an der Drehmaschine zu befestigen, wobei die zylindrische Basis (2) sich radial erstreckende Schlitze (3) aufweist,
wobei das Spannfutter ferner Adapter (4.1, 4.2) umfasst, die in den sich radial erstreckenden Schlitzen montiert sind, wobei jeder Adapter (4.1, 4.2) eine Zahnstange (5.1, 5.2) aufweist, die sich parallel zu den sich radial erstreckenden Schlitzen (3) erstreckt; und Backenvorrichtungen (9), die lösbar an den Adaptern (4.1, 4.2) montiert und darauf radial beweglich sind, wobei jede Backenvorrichtung (9) ein Verriegelungselement (16) aufweist, wobei das Verriegelungselement (16) zwischen einer Verriegelungsstellung und einer Freigabestellung beweglich ist, wobei das Verriegelungselement (16) in der Verriegelungsstellung in die Zahnstange (5.1, 5.2) eingreift und das Verriegelungselement (16) in der Freigabestellung nicht in die Zahnstange (5.1, 5.2) eingreift, wobei das Verriegelungselement mittels eines Betätigungselements (18) von der Verriegelungsstellung in die Freigabestellung beweglich ist,
**dadurch gekennzeichnet, dass** die Backenvorrichtung ein Stützelement (20) zum drehbaren Stützen eines Hebelwerkzeugs (21) in einer Betätigungsstellung, in der das Hebelwerkzeug (21) das Betätigungselement (18) betätigt, umfasst.

2. Spannfutter nach Anspruch 1, wobei das Verriegelungselement (16) eine Verzahnung umfasst.

3. Spannfutter nach einem der Ansprüche 1 oder 2, wobei das Verriegelungselement (16) in die Verriegelungsstellung vorgespannt ist.

4. Spannfutter zum Halten eines Werkstücks, insbesondere eines Rings, in einer Drehmaschine, eine zylindrische Basis (2) umfassend, die dazu ausgelegt ist, die Basis (2) an der Drehmaschine zu befestigen, wobei die zylindrische Basis (2) sich radial erstreckende Schlitze (3) aufweist,
wobei das Spannfutter ferner Adapter (4.1, 4.2) umfasst, die in den sich radial erstreckenden Schlitzen montiert sind, wobei jeder Adapter (4.1, 4.2) eine Zahnstange (5.1, 5.2) aufweist, die sich parallel zu den sich radial erstreckenden Schlitzen (3) erstreckt; und Backenvorrichtungen (9), die lösbar an den Adaptern (4.1, 4.2) montiert und darauf radial beweglich sind, wobei jede Backenvorrichtung (9) ein Verriegelungselement (16) aufweist, wobei das Verriegelungselement (16) zwischen einer Verriegelungsstellung und einer Freigabestellung beweglich ist, wobei das Verriegelungselement (16) in der Verriegelungsstellung in die Zahnstange (5.1, 5.2) eingreift und das Verriegelungselement (16) in der Freigabestellung nicht in die Zahnstange (5.1, 5.2) eingreift, **dadurch gekennzeichnet, dass** die Zahnstange (5.1, 5.2) ein Längselement mit einer ersten Seitenfläche (6) und einer zweiten Seitenfläche (7) umfasst, wobei die zweite Seitenfläche (7) der ersten Seitenfläche (6) entgegengesetzt ist, wobei eine erste Verzahnung auf der ersten Seitenfläche (6) angeordnet ist und eine zweite Verzahnung auf der zweiten Seitenfläche (7) angeordnet ist.

5. Spannfutter nach einem der vorstehenden Ansprüche, wobei jede Backenvorrichtung (9) eine Backenbasis (10) aufweist, die dazu ausgelegt ist, am Adapter (4.1, 4.2) montiert zu werden, und eine obere Backe (11), die dazu ausgelegt ist, das Werkstück zu berühren, und an der Backenbasis (10) montiert ist.

6. Spannfutter nach einem der vorstehenden Ansprüche, wobei jede Backenvorrichtung (9) einen ersten abnehmbaren Einsatz (15) mit einer ersten Kontaktfläche zum Kontaktieren des Werkstücks umfasst.

7. Spannfutter nach Anspruch 6, wobei jede Backenvorrichtung einen zweiten abnehmbaren Einsatz (15) mit einer zweiten Kontaktfläche zum Kontaktieren eines Werkstücks umfasst, wobei die erste Kontaktfläche zu einer Drehachse der zylindrischen Basis (2) radial nach innen ausgerichtet ist und die zweite Kontaktfläche von der Drehachse der zylindrischen Basis (2) radial nach außen ausgerichtet ist.

8. Spannfutter nach einem der vorstehenden Ansprüche, wobei die zylindrische Basis (2) mindestens drei, vorzugsweise sechs, sich radial erstreckende Schlitze (3), mindestens drei, vorzugsweise sechs, Adapter (4.1, 4.2), die in den sich radial erstreckenden Schlitzen (3) montiert sind, und mindestens drei, vorzugsweise sechs, Backenvorrichtungen (9), die an den Adaptern (4.1, 4.2) montiert sind, umfasst.

9. Spannfutter nach einem der vorstehenden Ansprüche, wobei die Adapter (4.1, 4.2), insbesondere durch ein hydraulisches Stellglied, innerhalb der sich radial erstreckenden Schlitze (3) beweglich sind, um das Werkstück einzuspannen.

10. Drehmaschine, **gekennzeichnet durch** ein Spannfutter (1) zum Halten eines Werkstücks, insbesondere eines Rings, nach einem der vorstehenden Ansprüche.

## Revendications

1. Mandrin servant à maintenir une pièce, en particulier une bague, dans un tour comprenant
une base cylindrique (2) conçue pour attacher ladite base (2) audit tour, la base cylindrique (2) comportant des fentes à étendue radiale (3),
le mandrin comprenant en outre
des adaptateurs (4.1, 4.2) fixés dans lesdites fentes à étendue radiale, chaque adaptateur (4.1, 4.2) comportant une crémaillère (5.1, 5.2) qui s'étend parallèlement auxdites fentes à étendue radiale (3) ; et
des dispositifs formant mâchoires (9) fixés de manière détachable sur lesdits adaptateurs (4.1, 4.2) et déplaçables radialement sur ceux-ci, chaque dispositif formant mâchoire (9) comportant un élément de blocage (16), l'élément de blocage (16) étant déplaçable entre une position de blocage et une position de déblocage, l'élément de blocage (16) étant en prise avec la crémaillère (5.1, 5.2) dans la position de blocage et l'élément de blocage (16) n'étant pas en prise avec la crémaillère (5.1, 5.2) dans la position de déblocage, ledit élément de blocage étant déplaçable de la position de blocage vers la position de déblocage au moyen d'un élément d'actionnement (18),
**caractérisé en ce que**
le dispositif formant mâchoire comprend un élément de support (20) servant à supporter de manière rotative un outil formant levier (21) dans une position d'actionnement dans laquelle l'outil formant levier (21) actionne l'élément d'actionnement (18).

2. Mandrin selon la revendication 1, dans lequel ledit élément de blocage (16) comprend une denture.

3. Mandrin selon l'une quelconque des revendications 1 et 2, dans lequel ledit élément de blocage (16) est pré-sollicité vers la position de blocage.

4. Mandrin servant à maintenir une pièce, en particulier une bague, dans un tour comprenant
une base cylindrique (2) conçue pour attacher ladite base (2) audit tour, la base cylindrique (2) comportant des fentes à étendue radiale (3),
le mandrin comprenant en outre
des adaptateurs (4.1, 4.2) fixés dans lesdites fentes à étendue radiale, chaque adaptateur (4.1, 4.2) comportant une crémaillère (5.1, 5.2) qui s'étend parallèlement auxdites fentes à étendue radiale (3) ; et
des dispositifs formant mâchoires (9) fixés de manière détachable sur lesdits adaptateurs (4.1, 4.2) et déplaçables radialement sur ceux-ci, chaque dispositif formant mâchoire (9) comportant un élément de blocage (16), l'élément de blocage (16) étant déplaçable entre une position de blocage et une position de déblocage, l'élément de blocage (16) étant en prise avec la crémaillère (5.1, 5.2) dans la position de blocage et l'élément de blocage (16) n'étant pas en prise avec la crémaillère (5.1, 5.2) dans la position de déblocage, **caractérisé en ce que** la crémaillère (5.1, 5.2) comprend un organe longitudinal comportant une première surface latérale (6) et une seconde surface latérale (7), la seconde surface latérale (7) étant disposée à l'opposé de la première surface latérale (6), la première surface latérale (6) comportant une première denture et la seconde surface latérale (7) comportant une seconde denture.

5. Mandrin selon l'une quelconque des revendications précédentes, dans lequel chaque dispositif formant mâchoire (9) comporte une base de mâchoire (10) conçue pour la fixation sur l'adaptateur (4.1, 4.2) et une mâchoire supérieure (11) conçue pour venir en contact avec ladite pièce et fixée sur la base de mâchoire (10).

6. Mandrin selon l'une quelconque des revendications précédentes, dans lequel chaque dispositif formant mâchoire (9) comprend une première garniture amovible (15) comportant une première surface de contact destinée à venir en contact avec ladite pièce.

7. Mandrin selon la revendication 6, dans lequel chaque dispositif formant mâchoire comprend une seconde garniture amovible (15) comportant une seconde surface de contact destinée à venir en contact avec une pièce, dans lequel ladite première surface de contact est orientée radialement vers l'intérieur dans une direction allant vers un axe de rotation de la base cylindrique (2) et ladite seconde surface de contact est orientée radialement vers l'extérieur dans une direction s'éloignant dudit axe de rotation de la base cylindrique (2) .

8. Mandrin selon l'une quelconque des revendications précédentes, dans lequel la base cylindrique (2) comprend au moins trois, de préférence au moins six, fentes à étendue radiale (3), au moins trois, de préférence au moins six, adaptateurs (4.1, 4.2) fixés dans lesdites fentes à étendue radiale (3) et au moins trois, de préférence au moins six, dispositifs formant mâchoires (9) fixés sur lesdits adaptateurs (4.1, 4.2).

9. Mandrin selon l'une quelconque des revendications précédentes, dans lequel les adaptateurs (4.1, 4.2) sont déplaçables, en particulier par le biais d'un actionneur hydraulique, dans les fentes à étendue radiale (3) afin de serrer la pièce.

10. Tour **caractérisé par** un mandrin (1) servant à maintenir une pièce, en particulier une bague, selon l'une quelconque des revendications précédentes.
